(19) Europäisches Patentamt
European Patent Office
Office européen des brevets

(11) Publication number: **0 157 487**
**B1**

(12) # EUROPEAN PATENT SPECIFICATION

(45) Date of publication of patent specification: **15.06.88**

(51) Int. Cl.$^4$: **C 04 B 35/48**

(21) Application number: **85301167.4**

(22) Date of filing: **21.02.85**

(54) **Ceramic compacts comprising zirconia.**

(30) Priority: **27.02.84 JP 36774/84**

(43) Date of publication of application:
**09.10.85 Bulletin 85/41**

(45) Publication of the grant of the patent:
**15.06.88 Bulletin 88/24**

(84) Designated Contracting States:
**DE FR GB NL SE**

(56) References cited:
**US-A-3 740 340**

**CHEMICAL ABSTRACTS, vol. 100, no. 12, 19th March 1984, Columbus, Ohio, USA; MITSUBISHI METAL CORP. "Ceramic materials for cutting tools", page 283, column 1, abstract no. 90292g, & JP-A-58-185477 (JAPAN KOKAI TOKKYO KOHO) 29-10-1**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Yamakawa, Akira**
**c/o Itami Works of Sumitomo Electric Ind., Ltd.**
**1-1 Koyakita 1-Chome Itami-Shi Hyogo (JP)**
Inventor: **Kamijo, Eiji**
**c/o Itami Works of Sumitomo Electric Ind., Ltd.**
**1-1 Koyakita 1-Chome Itami-Shi Hyogo (JP)**

(74) Representative: **Horton, Andrew Robert Grant et al**
**BOWLES HORTON Broadway House London Road**
**Bourne End Hemel Hempstead HP1 2RU (GB)**

**EP 0 157 487 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a ceramic compact or sintered body and more particularly, it is concerned with a ceramic compact predominantly comprising tetragonal and/or cubic zirconia ($ZrO_2$).

Sintered ceramic materials have been studied and developed for use as structural materials. However, their practical use has been quite limited owing to practical difficulties in obtaining adequate strength, stability and durability.

Compacts comprising tetragonal $ZrO_2$, both dispersed and partly stabilized and having a transverse rupture strength of 110 kg/mm$^2$ are known from JP—A—140762/1980. Compacts consisting of $ZrO_2$ and one or more boride, carbide or nitride of AL, Si, or elements in Groups IVa, Va, and VIa of the Periodic Table and/or $Al_2O_3$ are known from JP—A—120571/1983. The latter compacts have a transverse rupture strength up to 160 kg/mm$^2$, but cannot be conveniently sintered.

It is a general object of the present invention to provide a novel ceramic compact.

It is another object of the present invention to provide a high strength ceramic compact predominantly comprising tetragonal and/or cubic $ZrO_2$ and in particular a compact which is readily sintered.

A ceramic compact according to the invention comprises $ZrO_2$ as a predominant component. A stabilizer, preferably selected from oxides of Group IIIa elements, CaO or MgO or a mixture of such oxides is dissolved in the zirconia to form a solid solution. The compact includes a second component consisting of at least one carbonitride, carboxide, oxynitride or carboxynitride of an element in Group IVa, Va, or VIa of the Periodic Table.

Thus according to the invention a ceramic compact consists of 55 to 96% by volume of a first component, 4 to 45% by volume of a second component and at most 3% by volume of unavoidable impurities, wherein the first component consists of zirconia of which at least 80% by weight is in tetragonal or cubic form, the balance being monoclinic and a stabilizer or a mixture of stabilizers forming a solid solution in the zirconia; and the second component consists of at least one carbonitride, carboxide, oxynitride or carboxynitride of an element in Group IVa, Va or VIa elements of Periodic Table.

If the $ZrO_2$ phase were less than 55% by volume of the sintered compact, the strength of the compact would be insufficient, while if the $ZrO_2$ phase were more than 96% by volume, the hardness and strength of the compact would be lowered. Furthermore, the $ZrO_2$ phase preferably consists of 80% by weight or more of tetragonal and/or cubic form, since if the proportion of the monoclinic form is increased, the strength of the compact is lowered.

Impurities incorporated in the raw materials or introduced during the manufacturing process should be at most 3% volume to avoid loss of strength in the compact.

The aforementioned stabilizer is required to keep the zirconia phase tetragonal or cubic, and should be present to a predetermined amount, herein intended to mean 1/3 to 1/1 of the amount capable of keeping stable the cubic form up to the minimum temperature shown in the constitutional diagram. When the stabilizer is $Y_2O_3$, the predetermined amount is 2.5 to 7.5 mol %.

In the second component, the use of Ti compounds for some purposes, particularly for a substrate for a thin film magnetic head, is preferably avoided, since the Ti compounds have a hardness which is considerably different from that of the $ZrO_2$ phase, and so the surface tends to be roughened during surface grinding. Moreover, if a carbide or nitride alone is used for the second component, sintering is difficult, and even mixtures of carbide and nitride do not improve sintering. However, the use of substitution solid solutions such as carbonitrides, carboxides, oxynitrides and carboxynitrides generally yields high strength compacts. In particular, it is preferable to use a solid solution represented by the general formula,

$$M(C_lN_mO_n)_z$$

wherein M represents at least one Group IVa, Group Va or Group VIa element of Periodic Table, $l+m+n=1$, $l+m\neq0$, $m+n\neq0$, $l+n\neq0$ and $1.2>z>0.5$.

Preparation of the compact or sintered body of the present invention can be carried out in known manner. For example, a mixture of starting powders may be subjected to a hot press or to compacting followed by sintering at atmospheric pressure. Furthermore, it is found that a subsequent hot hydraulic press is very effective for obtaining a precise compact.

The following examples are given in order to illustrate the present invention in detail without limiting the same.

Example 1

A respective sample of $ZrO_2$, prepared by a coprecipitation method and containing 3 mols of $Y_2O_3$, was mixed with each of the second components listed in Table 1 and then hot pressed *in vacuo* at 1500°C and 300 kg/cm$^2$ for 2 hours. The volumetric measures were made on the assumption of a relative density of 6.05 for $ZrO_2$ and a known density for the second component for the calculation of a corresponding weight ratio. The various compacts were subjected to grinding and then to X-ray diffraction to obtain the proportions of the tetragonal form and cubic form according to the following formula:

$$\text{Volume ratio of (tetragonal+cubic)} = \frac{\text{tetragonal}(111)+\text{cubic}(111)}{\text{monoclinic}(11\bar{1})+\text{monoclinic}(111)+\text{tetragonal}(111)+\text{cubic}(111)}$$

The hardness and transverse rupture strength were measured by the methods according to HRA and JIS.

It will clearly be understood from the results as shown in Table 1 that a markedly high strength can be given when the second component is in a proportion of 4 to 45% by volume and consists of carbonitrides, carboxides, oxynitrides or carboxynitrides or Group IVa, Va and VIa elements or a solid solution thereof.

TABLE 1

| Sample No. | Second component: Composition | Second component: Amount (vol %) | Tetragonal+cubic (vol %) | Hardness HRA | Transverse rupture strength MPa |
|---|---|---|---|---|---|
| 1 | $TiC_{0.7}N_{0.3}$ | 15 | 85 | 92.0 | 160 |
| 2 | $TiC_{0.7}N_{0.3}$ | 35 | 85 | 93.0 | 170 |
| 3 | $TiC_{0.5}N_{0.5}$ | 25 | 90 | 92.5 | 170 |
| 4 | $ZrC_{0.5}N_{0.5}$ | 25 | 90 | 92.0 | 165 |
| 5 | $NbC_{0.7}N_{0.3}$ | 25 | 90 | 92.0 | 170 |
| 6 | $Ti_{0.5}W_{0.5}C_{0.9}N_{0.1}$ | 25 | 90 | 92.5 | 170 |
| 7 | $TiN_{0.5}O_{0.5}$ | 25 | 90 | 92.5 | 165 |
| 8 | $TiC_{0.5}N_{0.3}O_{0.2}$ | 25 | 90 | 92.5 | 160 |
| 9* | $TiC_{0.7}N_{0.3}$ | 50 | 70 | 91.5 | 80 |
| 10* | $TiC_{0.7}N_{0.3}$ | 2 | 90 | 91.2 | 110 |
| 11* | TiC | 25 | 85 | 91.5 | 120 |
| 12* | TiN | 25 | 80 | 91.5 | 110 |
| 13* | TiC<br>TiN | 12.5<br>12.5 | 85 | 91.5 | 140 |
| 14* | — | — | 90 | 91.0 | 120 |

Note
*Comparative Sample

Example 2

Samples of $ZrO_2$ powder including various different stabilizers were mixed with $TiC_{0.7}N_{0.3}$ to give a proportion of 25% by volume to the sintered compact, sintered and then subjected to assessment of the crystalline form $ZrO_2$, hardness and transverse rupture strength as described with reference to Example 1. The results are shown in Table 2. Depending upon the particular stabilizer, it may be required that at least 80% by weight of the $ZrO_2$ crystals are of tetragonal and cubic form.

TABLE 2

| Sample No. | Stabilizer Composition | Stabilizer Amount (mol %) | Tetragonal +cubic (vol %) | Hardness HRA | Transverse rupture strength MPa |
|---|---|---|---|---|---|
| 21 | $Y_2O_3$ | 3 | 90 | 92.5 | 170 |
| 22 | $Y_2O_3$ | 5 | 95 | 92.5 | 130 |
| 23 | CaO | 7 | 95 | 92.5 | 130 |
| 24* | $Y_2O_3$ | 1 | 30 | 92.0 | 60 |
| 25* | $Y_2O_3$ | 0 | 0 | not compacted | |

Note
*Comparative Sample

Example 3

When the sintered compacts obtained in Example 1 were subjected to polishing using diamond paste, the compacts containing the Ti compounds as the second component each had a surface roughness of at least 0.03 μm but the others (Sample Nos. 4 and 5 in Table 1) showed a surface roughness of at most 0.01 μm. This is considered due to the fact that the Ti compounds have a greater hardness that is largely different from that of the $ZrO_2$ phase.

Owing to the excellent surfaces that can readily be obtained, the present invention is useful in the manufacture of thin film magnetic heads. When the compact of Sample No. 4 in Table 1 was worked into a substrate for a thin film magnetic head, the compact could be well machined and a substrate made from such a compact compared favourably in performance with the commonly used $Al_2O_3$—TiC ceramics.

Example 4

The mixed powders with the compositions of Table 1 were prepared in a manner as described in Example 1, subjected to a hydrostatic pressure press at a pressure of 2 t/cm$^2$ and sintered in vacuum at 1600°C. Further, the resulting compacts were subjected to a hot hydrostatic press at 1600°C and 1000 atm in Ar gas. The properties of the compacts are shown in Table 3:

TABLE 3

| Sample No. | Second component: Composition | Second component: Amount (vol %) | Tetragonal +cubic (vol %) | Hardness HRA | Density (g/cm³) | Transverse rupture strength MPa |
|---|---|---|---|---|---|---|
| 41 | $TiC_{0.7}N_{0.3}$ | 15 | 85 | 99.5 | 92.0 | 160 |
| 42 | $TiC_{0.7}N_{0.3}$ | 35 | 85 | 99.0 | 93.0 | 160 |
| 43 | $TiC_{0.5}O_{0.5}$ | 25 | 90 | 99.5 | 92.5 | 160 |
| 44 | $ZrC_{0.5}N_{0.5}$ | 25 | 90 | 99.5 | 92.0 | 160 |
| 45 | $NbC_{0.7}N_{0.3}$ | 25 | 90 | 99.5 | 92.0 | 160 |
| 46 | $Ti_{0.5}W_{0.5}C_{0.9}N_{0.1}$ | 25 | 90 | 99.5 | 92.5 | 160 |
| 47 | $TiN_{0.5}O_{0.5}$ | 25 | 90 | 99.5 | 92.5 | 160 |
| 48 | $TiC_{0.5}N_{0.3}O_{0.2}$ | 25 | 90 | 99.5 | 92.5 | 160 |
| 49* | $TiC_{0.7}N_{0.3}$ | 50 | 70 | 98 | 91.0 | 70 |
| 50* | $TiC_{0.7}N_{0.3}$ | 2 | 90 | 99.5 | 91.0 | 100 |
| 51* | TiC | 25 | 85 | 98 | 90.5 | 80 |
| 52* | TiN | 25 | 80 | 98 | 90.5 | 80 |
| 53* | TiC<br>TiN | 12.5<br>12.5 | 85 | 99 | 90.5 | 100 |
| 54* | — | — | 90 | 99.5 | 91.0 | 100 |

Note
*Comparative Sample

Example 5

A slitter for a magnetic tape, having a dimension of 120 mm×50 mm×2 mm (holed disk) was made in an analogous manner to Example 1, Sample No. 1 of Table 1 and subjected to assessment of the edge breakage after grinding and the cutting performance. The slitter of the present invention exhibited a better cutting performance or sharpness without breakage, than that of the commonly used fine grain cemented carbides. In addition, the wear resistance of the slitter of the present invention was at least twice that of the cemented carbides.

On the other hand, a comparative slitter made of tetragonal $ZrO_2$ only was inferior in cutting performance owing to edge breakage, to that of cemented carbides.

As is evident from these results, the compositions of the present invention are excellent for sintering. The invention is useful for the mass production of compacts having complicated shapes generally, and the ceramic compacts with a high transverse rupture strength may be made by an inexpensive sintering method.

**Claims**

1. A ceramic compact consisting of 55 to 96% by volume of a first component, 4 to 45% by volume of a second component and at most 3% by volume of unavoidable impurities, wherein the first component consists of zirconia of which at least 80% by weight is in tetragonal or cubic form, the balance being monoclinic and a stabilizer or a mixture of stabilizers forming a solid solution in the zirconia; and the second component consists of at least one carbonitride, carboxide, oxynitride or carboxynitride of an element in Group IVa, Va or VIa elements of Periodic Table.

2. A ceramic compact as claimed in claim 1, wherein the stabilizer is at least one oxide of any Group IIIa element or calcium oxide or magnesium oxide.

3. A ceramic compact as claimed in claim 1, wherein the first component contains $Y_2O_3$ as the stabilizer in a proportion of 2.5 to 7.5 mol %.

4. A ceramic compact as claimed in any of claims 1 to 3, wherein the second component is a solid solution represented by the following general formula:

$$M(C_l N_m O_n)_z$$

wherein M is at least one element in Groups IVa, Va and VIa of the Periodic Table, $l+m+n=1$, $l+m\neq0$, $m+n\neq0$, $l+n\neq0$ and $1.2>z>0.5$.

**Patentansprüche**

1. Keramischer kompakter Körper, bestehend aus 55 bis 96 Vol.-% einer ersten Komponente, 4 bis 45 Vol.-% einer zweiten Komponente und höchstens 3 Vol.-% an unvermeidlichen Verunreinigungen, wobei die erste Komponente aus Zirkonerde besteht, wovon wenigstens 80 Gew.-% in tetragonaler oder kubischer Form vorliegen und der Rest monoklin ist, und einem Stabilisator oder einem Stabilisatorgemisch, das eine feste Lösung in der Zirkonerde bildet, und die zweite Komponente aus wenigstens einem Carbonitrid, Carboxid, Oxynitrid oder Carboxynitrid eines Elements der Gruppen IVa, Va oder VIa des Periodensystems besteht.

2. Keramischer kompakter Körper nach Anspruch 1, worin der Stabilisator wenigstens ein Oxid eines Elements der Gruppe IIIa oder Calcium- oder Magnesiumoxid ist.

3. Keramischer kompakter Körper nach Anspruch 1, worin die erste Komponente $Y_2O_3$ als Stabilisator in einem Mengenanteil von 2,5 bis 7,5 Mol-% enthält.

4. Keramischer kompakter Körper nach einem der Ansprüche 1 bis 3, worin die zweite Komponente eine feste Lösung der folgenden allgemeinen Formel ist:

$$M(C_l N_m O_n)_z,$$

worin M wenigstens ein Element der Gruppen IVa, Va und VIa des Periodensystems ist, $l+m+n=1$, $l+m\neq0$, $m+n\neq0$, $l+n\neq0$ und $1,2>z>0,5$.

**Revendications**

1. Comprimé céramique comprenant 55 à 96% en volume d'un premier composant, de 4 à 45% en volume d'un deuxième composant et au plus 3% en volume d'impuretés inévitables, le premier composant étant constitué de zircone, dont au moins 80% en poids sont sous forme tétragonale ou cubique, le reste étant monoclinique, et d'un stabilisant ou d'un mélange de stabilisants formant une solution solide dans la zircone; le deuxième composant étant constitué d'au moins un carbonitrure, carboxyde, oxynitrure ou carboxynitrure d'un élément du groupe IVa, Va ou VIa du Tableau Périodique.

2. Comprimé céramique selon la revendication 1, dans lequel le stabilisant est au moins un oxyde d'un élément quelconque du groupe IIIa, ou l'oxyde de calcium ou l'oxyde de magnésium.

3. Comprimé céramique selon la revendication 1, dans lequel le premier composant contient du $Y_2O_3$ en tant que stabilisant, en une proportion de 2,5 à 7,5% en moles.

4. Comprimé céramique selon l'une quelconque des revendications 1 à 3, dans lequel le deuxième composant est une solution solide représentée par la formule générale suivante:

$$M(C_l N_m O_n)_z$$

dans laquelle M est au moins un élément des groupes IVa, Va et VIa du Tableau Périodique, $l+m+n=1$, $l+m\neq0$, $m+n\neq0$, $l+n\neq0$ et $1,2>z>0,5$.